# EUROPÄISCHE PATENTSCHRIFT

(11) **EP 0 858 740 B1**
(45) Veröffentlichungstag und Bekanntmachung des Hinweises auf die Patenterteilung: **07.11.2001**
(21) Anmeldenummer: 97102179.5
(22) Anmeldetag: 12.02.1997
(51) Int. Cl.: A22C 21/00

(54) **Einrichtung zum Bearbeiten der Beine von Geflügel**
Device for the treatment of the legs of slaughtered poultry
Dispositif pour le traitement des pattes de volailles abattues

(43) Veröffentlichungstag der Anmeldung: 19.08.1998
(73) Patentinhaber: NORDISCHER MASCHINENBAU RUD. BAADER GMBH + CO KG, 23560 Lübeck (DE)
(72) Erfinder: Habenicht, Frank, 23611 Sereetz (DE); Ziebell, Klaus, 23554 Lübeck (DE); Wruck, Siegbert, 18435 Stralsund (DE)
(74) Vertreter: Patentanwälte Wenzel & Kalkoff

(56) Entgegenhaltungen:
- EP-A- 0 323 661
- EP-A- 0 381 093
- EP-A- 0 442 554
- DE-A- 1 579 569
- GB-A- 1 181 462
- US-A- 3 038 197
- US-A- 4 480 353
- US-A- 5 188 560
- US-A- 5 496 210

## Beschreibung

Die Erfindung betrifft eine Einrichtung zum maschinellen Zerteilen eines von einem Geflügelkörper getrennten, aus Oberschenkel (27) und Unterschenkel (28) bestehenden Beines (25) im Bereich des Kniegelenks (29), umfassend im wesentlichen in horizontaler Ebene umlaufend bewegte Halterungen (8) zum hängenden Halten der Beine im Bereich des distalen Endes des Unterschenkels (26), Mittel (2) zum Abstützen der Beine, Führungsmittel (3) zum Führen und Ausrichten der Beine und Schneidmittel (4) zum Trennen der Beine, wobei die Mittel (2) zum Abstützen der Beine (25) eine im wesentlichen in horizontaler Ebene umlaufende Stützscheibe (10) umfassen, die an ihrem Umfang mit in die Bahn der Unterschenkel (26) eingreifenden und mit einer Stützkante (15) versehenen Rezessen (11) zur Aufnahme und Abstützung der Beine im Bereich ihrer Kniekehle (30) ausgestattet ist.

Bei einer derartigen Bearbeitung von Geflügelbeinen kommt es darauf an, daß die Trennung von Oberschenkel und Unterschenkel in einer Weise erfolgt, daß Knochensplitter und/oder -abschnitte vermieden werden.

Aus der europäischen Patentschrift EP 0 381 093 ist eine Einrichtung zum Zerteilen eines Geflügelkörpers bekannt, welche u. a. mit einem Aggregat zum Zerteilen der in einem vorgeschalteten Arbeitsgang von dem Geflügelkörper getrennten Beine ausgerüstet ist. Die Beine werden dort an ihrem Knöchelgelenk hängend in den Bereich einer Stützscheibe gefördert, die an ihrem Umfang angeordnete Rezesse zur Aufnahme der Beine aufweist und den Hängeförderer synchron begleitend angetrieben ist. Im Bereich der Peripherie der Stützscheibe ist ein Messer zum Zerteilen der Beine angeordnet.

Bei dieser Einrichtung ist beabsichtigt, das Kniegelenk durch Scherbeanspruchung auseinander zu ziehen, um es dann zwischen Gelenkkopf und -pfanne zu trennen. Nachteilig ist, daß eine entsprechende Funktion allenfalls bei einer genauen Einstellung der Einrichtung auf die jeweilige Länge der Unterschenkel der zu bearbeitenden Beine erreichbar ist.

Aus der europäischen Patentschrift EP 0 442 554 ist eine Einrichtung zum separaten Bearbeiten von Geflügelbeinen u. a. zwecks Teilung derselben im Bereich des Kniegelenkes zu entnehmen. Dabei werden die Beine an ihrem Knöchel hängend gefördert und durch Einwirkung auf die Kniescheibe relativ zu einer Schneideinrichtung positioniert, bevor durch diese eine Teilung im Bereich des Kniegelenkes von der Seite der Kniekehle her erfolgt.

Es ist die Aufgabe der Erfindung, eine Einrichtung zum Zerteilen von Geflügelbeinen vorzuschlagen, die bei konstruktiver Einfachheit eine Trennung von Oberschenkel und Unterschenkel im Bereich des Kniegelenkes in einer Weise ermöglicht, daß eine Beschädigung der Schenkelknochen sicher vermieden wird.

Diese Aufgabe wird bei einer Einrichtung der eingangs erwähnten Bauart erfindungsgemäß dadurch gelöst, daß die Stützscheibe (10) an ihrer Unterseite (14) mit Ausrichtmitteln zum im wesentlichen radialen Ausrichten der Oberschenkel (27) in bezug auf die Umlaufachse (7) der Stützscheibe (10) versehen ist, und daß die Führungsmittel (3) mindestens je eine mit dem Unterschenkel und dem Oberschenkel an deren dem Kniegelenk (29) zugewandten Außenseite in Kontakt tretende Führungsschiene (20, 21) umfassen, wobei die mit dem Unterschenkel (26) des Geflügelbeins (25) in Kontakt tretende Führungsschiene (20) zu der Umlaufbahn der Stützscheibe (10) so ausgerichtet ist, daß eine Verdrängung des Unterschenkels im Sinne einer Freistellung des Fußgelenkkopfes (28) des Unterschenkels innerhalb der diesen tragenden Halterung (8) erfolgt.

Die mit einer derartigen Einrichtung erzielbaren Vorteile bestehen insbesondere darin, daß die Trennung der Geflügelbeine im Bereich des Kniegelenkes unter genauer Ausrichtung und sicherer Fixierung erfolgt, wobei dies unabhängig von gewissen Längenmaß-Abweichungen vornehmlich des Unterschenkels erreicht wird.

Die Ausrichtung in die gewünschte Schnittlage kann dabei vorteilhaft dadurch erfolgen, daß die mit dem Oberschenkel des Geflügelbeins in Kontakt tretende Führungsschiene so angeordnet ist, daß sie eine Verdrängung des Oberschenkels im Sinne einer Verringerung des Beugewinkels zwischen dem Oberschenkel und dem Unterschenkel unter gleichzeitigem Drängen der Kniekehle gegen die Stützkante bewirkt, wobei die mit dem Oberschenkel des Geflügelbeins in Kontakt tretende Führungsschiene federnd ausweichbar angeordnet sein kann. Dabei kann die Ausrichtung dadurch begünstigt werden, daß die mit dem Unterschenkel des Geflügelbeins in Kontakt tretende Führungsschiene zu der Umlaufbahn der Stützscheibe so ausgerichtet ist, daß eine Verdrängung des Unterschenkels im Sinne einer Freistellung des Fußgelenkkopfes des Unterschenkels innerhalb der diesen tragenden Halterung erfolgt, wodurch die Ausrichtung behindernde Haltekräfte reduziert werden.

Um das Geflügelbein bezüglich der Lage seiner Gelenkebene unverrückbar festlegen zu können, können die Ausrichtmittel durch Ausnehmungen gebildet sein, in die zumindest der proximale Endteil des Oberschenkels bei der erwähnten Verringerung des Beugewinkels eintaucht. Diese Funktion läßt sich noch dadurch optimieren, daß die Ausnehmungen mindestens an der in Umlaufrichtung der Stützscheibe nachlaufenden Flanke eine im wesentlichen radial zu der Stützscheibe verlaufende Wandfläche aufweisen, die mit der vorauslaufenden Flanke des zugehörigen Rezesses fluchtet.

Weitere Vorteile und Ausführungsformen oder Ausgestaltungsmöglichkeiten der Erfindung sind den übrigen Unteransprüchen zu entnehmen und gehen aus der folgenden Beschreibung der in der schematischen Zeichnung dargestellten Ausführungsbeispiele hervor.

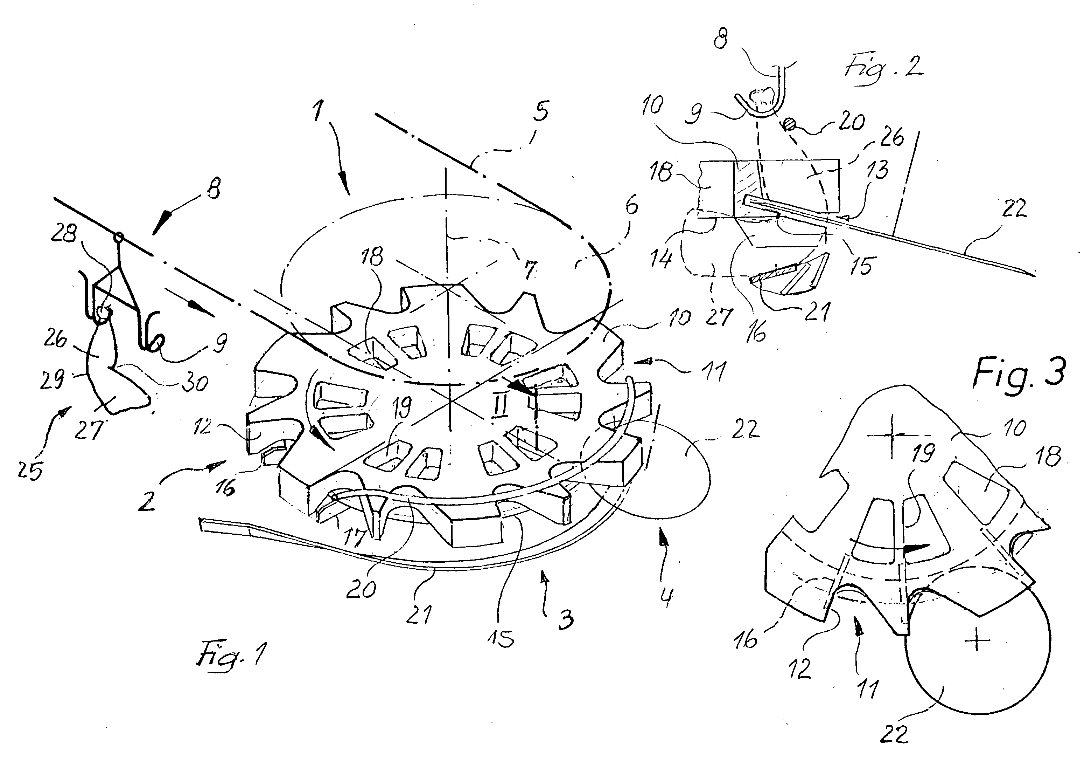

Es zeigt
- Fig. 1: einen Ausschnitt aus einer Bearbeitungsanlage für die Zerlegung von Geflügelkörpern mit der erfindungsgemäßen Einrichtung in perspektivischer Ansicht,
- Fig. 2: einen radialen Teilschnitt durch die Einrichtung gemäß Fig. 1 längs der Schnittlinie II - II , und
- Fig. 3: eine Teil-Draufsicht auf die Einrichtung nach Fig. 1.

Die erfindungsgemäße Einrichtung umfaßt ein nicht näher dargestelltes Maschinengestell mit einem Förderer 1 , Mittel 2 zum Abstützen der Beine, Führungsmittel 3 für die Beine und Schneidmittel 4 zum Trennen der Beine.

Der Förderer 1 ist als endloser Kettenförderer 5 ausgebildet, der die Gesamtanlage endlos geführt durchläuft. Die Führung erfolgt durch jeweils um eine senkrechte Achse umlaufende Umlenkräder, von denen lediglich ein Umlenkrad 6 mit einer Umlaufachse 7 gezeigt ist. Der Kettenförderer 5 ist mit in gleicher Teilung zueinander und hängend angeordneten Schäkeln 8 bestückt, die jeweils mit zwei in Förderrichtung hintereinander angeordneten Haltebügeln 9 zum Halten der Beine 25 an dem Fußgelenkkopf 28 des Unterschenkels 26 versehen und im Umlenkbereich des Umlenkrades 6 verdrehsicher geführt sind.

Die Mittel 2 zum Abstützen der Beine 25 sind unterhalb der Bahn der Schäkel 8 angeordnet und bestehen aus einer kreisscheibenförmigen, auf der Umlaufachse 7 konzentrisch befestigten Stützscheibe 10 , deren Abstand zu der Bahn der Schäkel 8 verstellbar ist. Die Stützscheibe 10 ist an ihrem Umfang mit Rezessen 11 versehen, die durch im wesentlichen sägezahnartige Ausgestaltung des Umfanges der Stützscheibe 10 gebildet sind. Dabei ist die in Drehrichtung nachlaufende Flanke 12 der Rezesse 11 radial ausgerichtet. Die Teilung der Rezesse 11 entspricht dem gegenseitigen Abstand der Haltebügel 9 der Schäkel 8 bzw. der Teilung der Schäkel 8 zueinander. Dabei laufen die Rezesse 11 auf einem Umlaufradius um, der demjenigen der Haltebügel 9 der Schäkel 8 entspricht. Die Stützscheibe 10 ist weiter an ihrem Umfang mit einer zu der Umlaufebene der Stützscheibe geneigten Radialnut 13 versehen, die vom äußeren Umfang der Stützscheibe 10 aus bis in den Grund der Rezesse 11 reicht. Dabei bildet die untere Flanke der Radialnut 13 mit der Unterseite 14 der Stützscheibe 10 eine nach außen, d. h. in den Rezeß 11 von dessen Grund her hineinragende Stützkante. Die Flanken 12 der Rezesse 11 sind nach unten über die Radialnut 13 hinaus durch von der Unterfläche 14 der Stützscheibe 10 aufragende Stege 16 verlängert, deren eine Wandfläche 17 mit der Flanke 12 fluchtet.

Die Stützscheibe 10 ist weiter mit trapezförmigen Ausnehmungen 18 versehen, die jeweils den Rezessen 11 zugeordnet sind und die Stützscheibe 10 durchdringen. Dabei sind die Ausnehmungen 18 so angelegt, daß jeweils eine ihrer radial verlaufenden Flanken 19 mit der Flanke 12 eines Rezesses 11 und damit der Wandfläche 17 eines Steges 16 fluchtet.

Die Führungsmittel 3 bestehen aus einer gestellfesten, oberhalb der Stützscheibe 10 angeordneten konzentrisch zu dieser und im Umlaufbereich der Rezesse 11 verlaufenden Rundführungen 20 , sowie einer unterhalb der Stützscheibe 10 angeordneten Führungsschiene 21 , die sich im wesentlichen konzentrisch und ebenfalls im Umlaufbereich der Rezesse 11 erstreckt. Dabei ist die Führungsschiene 21 verdrillt und endet im Bereich der Schneidmittel 4 .

Die Schneidmittel 4 bestehen aus einem umlaufend angetriebenen Kreismesser 22 , das wie am besten aus Fig. 2 ersichtlich in einer zu der Umlaufebene der Stützscheibe 10 geneigten Ebene umläuft und in die Radialnut 13 in der Peripherie der Stützscheibe 10 unter Überdeckung der Rezesse 11 hineinragt.

Nachstehend ist die Wirkungsweise der erfindungsgemäßen Einrichtung beschrieben, wobei davon ausgegangen ist, daß die Einrichtung in eine Gesamtanlage integriert ist, deren Förderer 1 die zu bearbeitenden Beine 25 mit ihrem Fußgelenkkopf 28 an Schäkel 8 hängend und mit dem Kniegelenk 29 nach außen heranführt. Beim Eintritt in den Wirkbereich der Einrichtung gelangen die Schäkel 8 in den Umlenkbereich des Förderers 1 , wobei die Beine in den Rezessen 11 der Stützscheibe 10 plaziert werden, was durch die Führungsmittel 2 unterstützt wird. Dabei erfolgt die Übernahme durch die Stützscheibe 10 so, daß das Kniegelenk 29 jeweils etwa in der Höhe der Radialnut 13 der Stützscheibe 10 liegt. Im Fortgang der Förderbewegung wird der Oberschenkel 27 mittels der Führungsschiene 21 unter allmählicher Verringerung des Beugewinkels zwischen Oberschenkel 27 und Unterschenkel 26 nach innen geführt, wobei die Stützkante 15 als Widerlager funktioniert, das das Bein 25 im Bereich der Kniekehle 30 abstützt. Der Abstand zwischen der Stützscheibe 10 und der Bahn der Schäkel 8 ist so eingestellt, daß die Stützkante 15 zunächst mehr unterhalb der Kniekehle 30 ansetzt. Mit zunehmender Verringerung des Beugewinkels wird das Bein 25 mittels der Führungsschiene 21 jedoch mehr und mehr angehoben, so daß schließlich die Stützkante 15 genau in der Kniekehle 30 positioniert ist, bevor die Schneidmittel 4 erreicht werden. Bis dahin ist der Oberschenkel 27 soweit um die Stützkante 15 herumgezogen, daß er mit seinem proximalen Ende in die zugeordnete Ausnehmung 18 eintaucht, wobei die Reibkräfte an den Führungselementen 20 und 21 bewirken, daß sich der Oberschenkel an der Wandfläche 17 des Steges 16 und der mit dieser fluchtenden Flanke 19 der Ausnehmung 18 anlegt und somit das Bein 25 radial zur Stützscheibe 10 ausgerichtet und fixiert wird.

Das Gegenlager bei diesem Beugevorgang bildet die Rundführung 20 , die so verläuft, daß der in dem Haltebügel 9 des Schäkels 8 aufgrund der Hebewirkung der Führungsschiene 21 angehobene Fußgelenkkopf 28 in dem Haltebügel 9 freigestellt wird, was die Ausrichtung des Beines 25 in Bezug auf die Lage der Kniekehle 30 zur Stützkante 15 begünstigt.

### Bezugszeichenliste

- 1: Förderer
- 2: Mittel zum Abstützen der Beine
- 3: Führungsmittel
- 4: Schneidmitte
- 5: Kettenförderer
- 6: Umlenkrad
- 7: Umlaufachse
- 8: Schäkel
- 9: Haltebügel
- 10: Stützscheibe
- 11: Rezeß
- 12: Flanke
- 13: Radialnut
- 14: Unterseite
- 15: Stützkante
- 16: Steg
- 17: Wandfläche
- 18: Ausnehmung
- 19: Flanke
- 20: Rundführung
- 21: Führungsschiene
- 22: Kreismesser
- 23 24 25: Bein
- 26: Unterschenkel
- 27: Oberschenkel
- 28: Fußgelenkkopf
- 29: Kniegelenk
- 30: Kniekehle

## Patentansprüche

1. Einrichtung zum maschinellen Zerteilen eines von einem Geflügelkörper getrennten, aus Oberschenkel (27) und Unterschenkel (26) bestehenden Beines (25) im Bereich des Kniegelenks (29), umfassend im wesentlichen in horizontaler Ebene umlaufend bewegte Halterungen (8) zum hängenden Halten der Beine im Bereich des distalen Endes des Unterschenkels (26), Mittel (2) zum Abstützen der Beine, Führungsmittel (3) zum Führen und Ausrichten der Beine und Schneidmittel (4) zum Trennen der Beine, wobei die Mittel (2) zum Abstützen der Beine (25) eine im wesentlichen in horizontaler Ebene umlaufende Stützscheibe (10) umfassen, die an ihrem Umfang mit in die Bahn der Unterschenkel (26) eingreifenden und mit einer Stützkante (15) versehenen Rezessen (11) zur Aufnahme und Abstützung der Beine im Bereich ihrer Kniekehle (30) ausgestattet ist, **dadurch gekennzeichnet, daß** die Stützscheibe (10) an ihrer Unterseite (14) mit Ausrichtmitteln zum im wesentlichen radialen Ausrichten der Oberschenkel (27) in bezug auf die Umlaufachse (7) der Stützscheibe (10) versehen ist, und daß die Führungsmittel (3) mindestens je eine mit dem Unterschenkel und dem Oberschenkel an deren dem Kniegelenk (29) zugewandten Außenseite in Kontakt tretende Führungsschiene (20, 21) umfassen, wobei die mit dem Unterschenkel (26) des Geflügelbeins (25) in Kontakt tretende Führungsschiene (20) zu der Umlaufbahn der Stützscheibe (10) so ausgerichtet ist, daß eine Verdrängung des Unterschenkels im Sinne einer Freistellung des Fußgelenkkopfes (28) des Unterschenkels innerhalb der diesen tragenden Halterung (8) erfolgt.

2. Einrichtung nach Anspruch 1 , **dadurch gekennzeichnet, daß** die mit dem Oberschenkel (27) des Geflügelbeins (25) in Kontakt tretende Führungsschiene (21) so angeordnet ist, daß sie eine Verdrängung des Oberschenkels im Sinne einer Verringerung des Beugewinkels zwischen dem Oberschenkel und dem Unterschenkel (26) unter gleichzeitigem Drängen der Kniekehle (30) gegen die Stützkante (15) bewirkt.

3. Einrichtung nach Anspruch 1 oder 2, **dadurch gekennzeichnet, daß** die mit dem Oberschenkel (27) des Geflügelbeins in Kontakt tretende Führungsschiene (21) federnd ausweichbar angeordnet ist.

4. Einrichtung nach Anspruch 1 , **dadurch gekennzeichnet, daß** die Ausrichtmittel durch Ausnehmungen (18) gebildet sind, wobei jedem Rezeß (11) eine Ausnehmung zugeordnet ist.

5. Einrichtung nach Anspruch 4, **dadurch gekennzeichnet, daß** die Ausnehmungen (18) mindestens an der in Umlaufrichtung der Stützscheibe (10) nachlaufenden Flanke (12) eine im wesentlichen radial zu der Stützscheibe verlaufende Wandfläche (17) aufweisen, die mit der Flanke (12) des zugehörigen Rezesses (11) fluchtet

6. Einrichtung nach Anspruch 4 oder 5, **dadurch gekennzeichnet, daß** jede Ausnehmung (18) als die Stützscheibe (10) durchdringender Durchbruch ausgebildet ist.

7. Einrichtung nach einem der Ansprüche 4 bis 6, **dadurch gekennzeichnet, daß** jede Ausnehmung (18) in Anpassung an die anatomischen Gegebenheiten an der dem Kniegelenk (29) abgewandten Innenseite des Oberschenkels (27) ausgestaltet ist.

8. Einrichtung nach Anspruch 1 , **dadurch gekennzeichnet, daß** die Schneidmittel (4) ein angetriebenes Kreismesser (22) umfassen, welches in den Umlaufbereich der Stützscheibe (10) eintaucht und dabei die Rezesse (11) überdeckt und daß die Schnittebene des Kreismessers mit der Ebene der Winkelhalbierenden des in Schnittposition erreichten Beugewinkels zwischen dem Oberschenkel (27) und dem Unterschenkel (26) im wesentlichen übereinstimmt.

9. Einrichtung nach einem der Ansprüche 1 bis 7, **dadurch gekennzeichnet, daß** die Stützscheibe (10) und die Schneidmittel (4) bezüglich ihres Abstandes zu der durch die Bahn der Halterungen (8) bestimmten Umlaufebene einstellbar sind.

## Claims

1. Device for automatically cutting up a leg (25) separated from a poultry body and consisting of a thigh (27) and a drumstick (26) in the region of the knee joint (29), including holders (8) moved to rotate substantially in a horizontal plane for holding the legs suspended in the region of the distal end of the drumstick (26), means (2) for supporting the legs, guide means (3) for guiding and aligning the legs and cutting means (4) for separating the legs, the means (2) for supporting the legs (25) including a supporting disc (10) rotating substantially in a horizontal plane and provided on its circumference with recesses (11) entering into the path of the drumsticks (26) and provided with a supporting edge (15) for receiving and supporting the legs in the region of the hollow (30) of the knee, **characterised in that** the supporting disc (10) is provided on its underside (14) with aligning means for substantially radially aligning the thighs (27) in relation to the axis of rotation (7) of the supporting disc (10) and that the guide means (3) include respective guide rails (20, 21) at least one coming into contact with the drumstick and one with the thigh at their outer faces directed towards the knee joint (29), the guide rail (20) coming into contact with the drumstick (26) of the poultry leg (25) being aligned in such a manner with respect to the circular path of the supporting disc (10) that the drumstick is displaced **in that** the condyle (28) of the ankle of the drumstick is released within its holder (8).

2. Device according to claim 1, **characterised in that** the guide rail (21) coming into contact with the thigh (27) of the poultry leg (25) is arranged in such a manner that it displaces the thigh by reducing the bending angle between the thigh and the drumstick (26), with the hollow (30) of the knee simultaneously being pressed against the supporting edge (15).

3. Device according to claim 1 or claim 2, **characterised in that** the guide rail (21) coming into contact with the thigh (27) of the poultry leg is arranged in such a manner that it can be resiliently deflected.

4. Device according to claim 1. **characterised in that** the aligning means are formed by openings (18), one opening being associated with each recess (11).

5. Device according to claim 4, **characterised in that** the openings (18) are provided at least on the flank (12) following the supporting disc (10) in the direction of rotation with a wall surface (17) extending substantially radially relative to the supporting disc and flush with the flank (12) of the associated recess (11).

6. Device according to claim 4 or claim 5, **characterised in that** each opening (18) is in the form of a through hole passing through the supporting disc (10).

7. Device according to one of claims 4 to 6, **characterised in that** each opening (18) is adapted to the anatomy on the inner face of the thigh (27) directed away from the knee joint (29).

8. Device according to claim 1, **characterised in that** the cutting means (4) include a driven circular knife (22) which penetrates into the region of the rotation of the supporting disc (10) thereby covering the recesses (11) and that the cutting plane of the circular knife substantially coincides with the plane of the bisecting line of the bending angle between the thigh (27) and the drumstick (26) achieved in the cutting position.

9. Device according to one of claims 1 to 7, **characterised in that** the distance of the supporting disc (10) and the cutting means (4) from the plane of rotation defined by the path of the holders (8) is adjustable.

## Revendications

1. Dispositif pour le dépeçage mécanique d'une jambe (25), séparée du corps d'une volaille, constituée d'une cuisse (27) et d'un pilon (26), dans la zone de l'articulation du genou (29), comportant des supports (8) se déplaçant en rotation essentiellement dans un plan horizontal, pour supporter en suspension les jambes dans la zone de l'extrémité distale du pilon (26), des moyens (2) pour soutenir les jambes, des moyens de guidage (3) pour guider et orienter les jambes, et des moyens de découpage (4) pour séparer les jambes, où les moyens (2) destinés à soutenir les jambes (25) comportent un disque d'appui (10), qui tourne essentiellement dans un plan horizontal, disque qui sur sa périphérie est équipé de renfoncements (11), qui entrent en prise avec la trajectoire des pilons (26) et comportent une arête d'appui (15), renfoncements destinés à recevoir et soutenir les jambes dans la zone de leur creux poplité (30), **caractérisé en ce que** le disque d'appui (10) est, sur sa face inférieure (14), pourvu de moyens d'orientation destinés à orienter essentiellement dans la direction radiale la cuisse (27) par rapport à l'axe de rotation (7) du disque d'appui (10), et **en ce que** les moyens de guidage (3) comportent chacun au moins un rail de guidage (20, 21), qui entre en contact avec le pilon et la cuisse sur leur face extérieure dirigée vers l'articulation du genou (29), le rail de guidage (20), qui entre en contact avec le pilon (26) de la jambe (25) de la volaille, étant orienté par rapport à la trajectoire en rotation du disque d'appui (10) de façon qu'il en résulte un refoulement du pilon, dans le sens d'un dégagement du condyle inférieur (28) du pilon, à l'intérieur du support (8) qui porte ce pilon.

2. Dispositif selon la revendication 1, **caractérisé en ce que** le rail de guidage (21), qui entre en contact avec la cuisse (27) de la jambe (25) de la volaille, est disposé de façon à provoquer un refoulement de la cuisse dans le sens d'une diminution de l'angle de pliage entre la cuisse et le pilon (26), avec simultanément un refoulement du creux poplité (30) contre l'arête d'appui (15).

3. Dispositif selon la revendication 1 ou 2, **caractérisé en ce que** le rail de guidage (21) entrant en contact avec la cuisse (27) de la jambe de la volaille peut être évité avec effet élastique.

4. Dispositif selon la revendication 1, **caractérisé en ce que** les moyens d'orientation sont constitués d'évidements (18), un évidement étant affecté à chaque renfoncement (11).

5. Dispositif selon la revendication 4, **caractérisé en ce que** les évidements (18) comportent, au moins contre le flanc (12) qui est en retard dans le sens de rotation du disque d'appui (10), une surface de paroi (17), qui pour l'essentiel court radialement par rapport au disque d'appui, surface de paroi qui est en alignement avec le flanc (12) du renfoncement correspondant (11).

6. Dispositif selon la revendication 4 ou 5, **caractérisé en ce que** chaque évidement (18) est constitué d'une traversée, qui traverse le disque d'appui (10).

7. Dispositif selon l'une des revendications 4 à 6, **caractérisé en ce que** chaque évidement (18) est configuré de façon à être adapté aux caractéristiques anatomiques au niveau de la face intérieure, opposée à l'articulation (29) du genou, de la cuisse (27).

8. Dispositif selon la revendication 1, **caractérisé en ce que** les moyens de découpage comportent un couteau circulaire entraîné (22), qui plonge dans la zone de rotation du disque d'appui (10), en recouvrant de ce fait les renfoncements (11), et **en ce que** le plan de coupe du couteau circulaire coïncide pour l'essentiel avec le plan de la bissectrice de l'angle de pliage, réalisé en position de découpage, entre la cuisse (27) et le pilon (26).

9. Procédé selon l'une des revendications 1 à 7, **caractérisé en ce que** le disque d'appui (10) et les moyens de découpage (4) peuvent être ajustés pour ce qui est de leur distance au plan de rotation défini par la trajectoire des supports (8).
